# EUROPÄISCHE PATENTANMELDUNG

(11) **EP 1 086 891 A2**
(43) Veröffentlichungstag der Anmeldung: **28.03.2001**
(21) Anmeldenummer: 00116494.6
(22) Anmeldetag: 31.07.2000
(51) Int. Cl.: B64G 1/58, F16L 59/02, B32B 5/28

(54) **Thermalschutzsystem**

(30) Priorität: 23.09.1999 DE 19945586
(71) Anmelder: Astrium GmbH, 85521 Ottobrunn (DE)
(72) Erfinder: Fischer, Wolfgang, Dipl.-Ing., 28870 Ottersberg (DE); Vogel, Walter, Dr., 88682 Salem (DE); Bolz, Jörg, Dipl.-Ing., 28777 Bremen (DE); Ebeling, Wolff-Dieter, Dipl.-Ing., 31139 Hildesheim (DE); Rieck, Ulrich, Dr., 21224 Rosengarten (DE)
(74) Vertreter: Hansmann, Dierk, Dipl.-Ing.

(57) **Zusammenfassung**

Ein Thermalschutzsystem, das insbesondere als Hitzeschutz für Raumfahrzeuge ausgebildet ist, weist eine auf die Außenhaut (1) des Raumfahrzeuges aufgebrachte flexible Isolationsmatte (2) auf, die mit wenigstens einer Lage einer Deckschicht (7) aus einem keramischen Faserverbundwerkstoff versehen ist, welche ihrerseits einen aus einem anorganischen Werkstoff bestehenden Überzug (8) aufweist. Entsprechend den jeweiligen, aus der speziellen Mission bzw. dem Anbringungsort auf dem Raumfahrzeug resultierenden Anforderungen besteht der Faserverbundwerkstoff aus anorganischen Fasern, vorzugsweise oxidischen, karbidischen oder Mischungen daraus, die in eine Matrix aus den gleichen Bestandteilen eingelagert sind. Das Aufbringen der Deckschicht erfolgt vorzugsweise mittels Kleben, Nähen oder durch eine Knopfverbindung. Die Anbindung an die Kaltstruktur des Raumfahrzeuges wird durch eine Klebeverbindung vorgenommen.

## Beschreibung

Die Erfindung betrifft ein Thermalschutzsystem, insbesondere Hitzeschutz für Raumfahrzeuge, mit einer auf die Außenhaut des Raumfahrzeuges aufgebrachten flexiblen Isolationsmatte.

Während des Aufstieges und während des Eintritts in die Atmosphären von Himmelskörpern, d.h. sowohl beim Wiedereintritt in die Erdatmosphäre als auch beim Eintritt in die Atmosphäre von Planeten und Monden, beispielsweise des Mars oder der Venus, sind Raumfahrzeuge extremen aerodynamischen, aerothermischen, aeroelastischen, mechanischen und akustischen Belastungen ausgesetzt. Für diese entscheidende Phase einer Weltraummission gilt es daher, die Kaltstruktur des Raumfahrzeuges mit einem wirkungsvollen thermischen Schutz auszustatten, der diesen Belastungen standhält, um nicht den Erfolg der gesamten Raumflugmission zu gefährden.

Bei wiederverwendbaren Raumtransportern wie dem amerikanischen Space-Shuttle, dem russischen BURAN, aber auch bei dem ursprünglich geplanten europäischen Projekt HERMES und dem zukünftigen japanischen Raumgleiter HOPE, stellt es eine bereits bekannte Maßnahme dar, an den hoch beanspruchten Bereichen wie der Unterseite, dem Nasenbereich und den Flügelvorderkanten keramische Kacheln oder Schindeln und Heißstrukturen als starre Thermalschutzsysteme anzubringen bzw. vorzusehen. Für die Leeseite dieser Fahrzeuge wurden dagegen flexible Mattenisolationen der eingangs genannten Art entwickelt, die an diesen Stellen auf die Kaltstruktur geklebt werden.

Aufgabe der Erfindung ist es, ein thermisches Schutzsystem der eingangs genannten Art so auszubilden, daß die Vorteile eines derartigen flexiblen Isolationssystems, wie geringes Gewicht, hohe Flexibilität zur Aufnahme der unterschiedlichen Dehnungen von Kaltstruktur und der heißen Außenwand, leichte Anbringung und Wartung sowie die vergleichsweise niedrigen Kosten, auch für die Luvseite von Raumflugkörpern nutzbar gemacht werden können. Eine weitere Aufgabe ist durch ein derartiges flexibles Isolationssystem höhere Verformungen der Kaltstruktur zuzulassen, die seinerzeit zu geringeren Wanddicken und damit zu einer erheblichen Gewichtsreduzierung des gesamten thermischen Schutzsystems eines Raumfahrzeuges führen.

Die Erfindung löst diese Aufgabe durch eine flexible Isolationsmatte, die mit wenigstens einer Lage einer Deckschicht aus einem keramischen Faserverbundwerkstoff versehen ist, welche ihrerseits einen aus einem anorganischen Werkstoff bestehenden Überzug aufweist.

Entsprechend den jeweiligen, aus der speziellen Mission bzw. dem Anbringungsort auf dem Raumfahrzeug resultierenden Anforderungen besteht in vorteilhafter Weiterbildung der Erfindung der Faserverbundwerkstoff aus anorganischen Fasern, vorzugsweise oxidischen, karbidischen oder Mischungen daraus, die in eine Matrix aus den gleichen Bestandteilen eingelagert sind.

Das erfindungsgemäße Thermalschutzsystem zeichnet sich insbesondere dadurch aus, daß es das Eindringen von heißen Gasen in die auf der Oberfläche des Raumflugkörpers angebrachte Isolationsmatte zuverlässig verhindert, indem es eine druckfeste Außenhaut bildet. Die Schutzschicht bewirkt zugleich eine großflächige Einleitung der auftretenden aerothermischen, mechanischen und akustischen Lasten, die dann anschließend über die darunter befindliche Isolationsmatte weitergeleitet und großflächig auf die Kaltstruktur verteilt und in diese eingeleitet werden. Sie bietet darüber hinaus einen äußerst wirksamen Schutz gegen erosive Zerstörungsmechanismen sowie gegen das Auftreten von Heißgasoxidation. Außerdem lassen sich bei dem erfindungsgemäßen Überzug die thermooptischen Eigenschaften, insbesondere die Absorptions/Emissionscharakteristik, durch geeignete Materialauswahl optimal einstellen. Schließlich zeichnet sich das Thermalschutzsystem nach der Erfindung durch eine nur geringe katalytische Wirkung aus.

Das Aufbringen der Deckschicht erfolgt erfindungsgemäß vorzugsweise mittels Kleben, Nähen oder durch eine Knopfverbindung. Die Anbindung an die Kaltstruktur des Raumfahrzeuges wird in vorteilhafter Weise durch eine Klebeverbindung, insbesondere mittels eines unter Raumtemperatur aushärtenden Klebers, vorzugsweise auf Silikonbasis, vorgenommen.

Nachfolgend soll die Erfindung anhand von in der Zeichnung dargestellten Ausführungsbeispielen näher erläutert werden. Es zeigen:
- Fig. 1: eine perspektivische Explosionsdarstellung des Aufbaus eines Hitzeschutzes für Raumfahrzeuge,
- Fig. 2: einen Vertikalschnitt durch die Anordnung gemäß Fig. 1,
- Fig. 3: eine abgewandelte Ausführungsform der Anordnung gemäß Fig. 2,
- Fig. 4: einen Detailschnitt gemäß der Linie IV-IV der in Fig. 3 dargestellten Anordnung,
- Fig. 5: eine weitere Ausführungsform mit keramischen Knöpfen, in einer der Anordnung gemäß Fig. 2 und
- Fig. 6 bis 9: Detaildarstellungen unterschiedlicher Ausführungen der Anordnung gemäß Fig. 5.

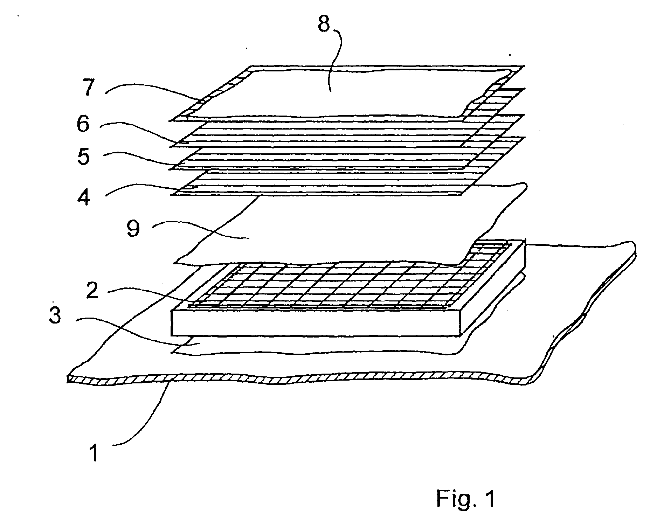

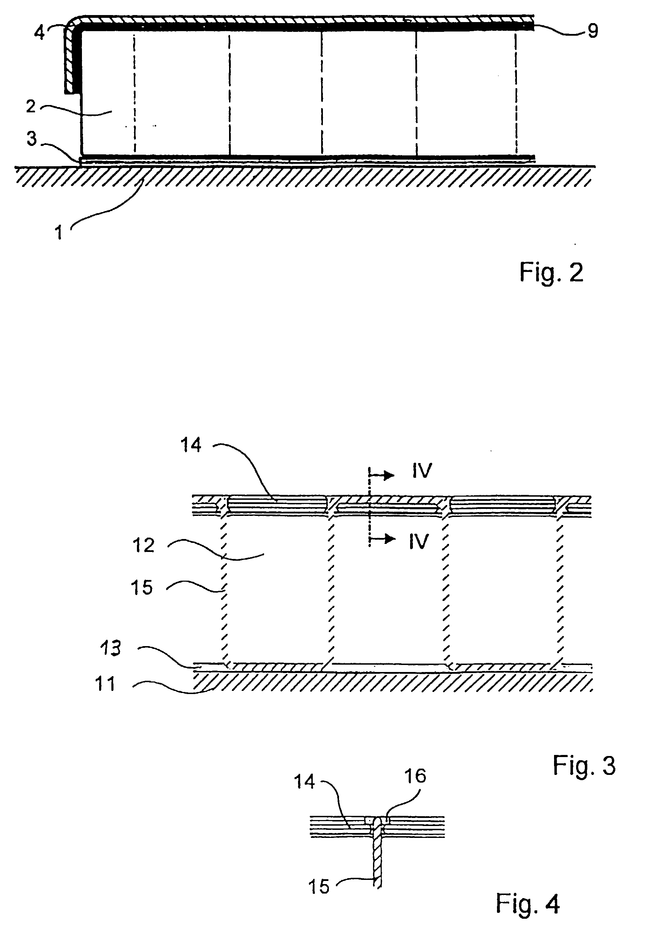

Der in den Figuren 1 und 2 gezeigte Aufbau eines Hitzeschutzes für die Struktur eines Raumfahrzeuges soll dieses insbesondere gegen die beim Eintritt in die Atmosphäre eines Himmelskörpers auf der Außenseite auftretenden thermischen Lasten abschirmen. Zu diesem Zweck besteht der Hitzeschutz zunächst aus einer auf die Außenhaut 1 des Raumfahrzeuges aufgebrachten flexiblen Isolationsmatte 2. Die Befestigung der Isolationsmatte 2 an die Kaltstruktur des Raumfahrzeuges, d.h. dessen Außenhaut 1, erfolgt durch eine Klebeverbindung, in diesem Fall mittels eines als Schicht 3 aufgebrachten, bei Raumtemperatur aushärtenden Silikonklebers.

Die Isolationsmatte 2 ist mit einer, im Fall des hier dargestellten Ausführungsbeispiels vierlagigen, keramischen Deckschicht 4 bis 7 versehen, von der in Fig. 2 der Einfachheit halber alle Einzelschichten als eine Lage dargestellt sind. Die oberste Lage 7 weist auf ihrer Außenseite einen anorganischen Überzug 8 auf, der aus einem anorganischen Binder auf der Basis einer der Verbindungen SiOC, SiO₂ SiC, SiBNC, SiBN₃C sowie einem anorganischen Füller, vorzugsweise aus einem der Werkstoffe SiB₆, SiC, TiB₂, Si₃N₄, SiB₃, ZrO₂, ZrSiO₄, oder aus einer Mischung zweier oder mehrerer dieser Komponenten besteht.

Das Anbinden der Schutzschicht 4 bis 7 erfolgt im Fall des in den Figuren 1 und 2 dargestellten Ausführungsbeispiels mittels Kleben, vorzugsweise durch einem der Matrix der keramischen Decksicht ähnlichen Kleber. Darüber hinaus können aber auch übliche keramische Kleber oder Keramikzement je nach Anforderung zum Einsatz kommen, die als Schicht 9 zwischen der Isolationsmatte 2 und der untersten Lage 4 der Deckschicht aufgebracht werden.

Bei dem in den Figuren 3 und 4 dargestellten zweiten Ausführungsbeispiel ist zwischen der keramischen Deckschicht 14 und der Isolationsmatte 12 eine Nähverbindung vorgesehen. Letztere besteht aus keramischen Fäden 15, die durch die Isolationsmatte 12 und Bohrungen in der Faserkeramikdeckschicht 14 geführt sind. Je nach Anforderung können dabei unterschiedliche Nahtabstände sowie Stichweiten gewählt werden.

Um eine aerodynamisch glatte Außenfläche zu erzeugen, können diese Fäden, wie in Fig. 4 dargestellt, in Nuten 16, die außen in die Deckschicht 14 eingearbeitet sind, eingelegt werden. Der Abschluß bzw. die Verfüllung der Nuten kann entweder über eine zusätzlich auflaminierte Faserverbundschicht oder aber über das Ausfüllen mit matrixeigenem Material erfolgen. Auf der Außenseite dieser Verbindung wird abschließend die in diesen Figuren nicht dargestellte gleiche Schutzschicht wie oben beschrieben aufgebracht. Die Anbindung der Isolationsmatte 12 an die Außenhaut 11 des Raumfahrzeuges erfolgt auch hier in analoger Weise durch einen als Schicht 13 aufgebrachten Kleber.

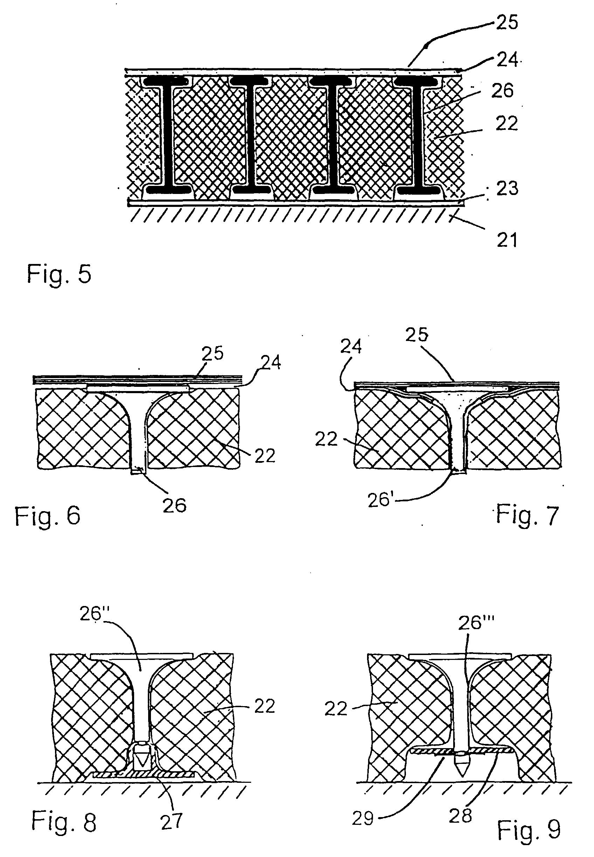

Bei dem abschließend in den Figuren 5 bis 9 gezeigten dritten Ausführungsbeispiel wird die Ankopplung der keramischen Deckschicht 24, 25 an die Isolationsmatte 22 durch Knöpfe 26 - 26''' bewirkt. Diese Verbindung ist als Doppelknopfverbindung ausgeführt. Die Knöpfe werden entweder, wie in Fig. 6 gezeigt durch Kleben mit den oben beschriebenen Werkstoffen oder, gemäß Fig. 7, durch Einlaminieren in die Deckschicht 24, 25 mit dieser verbunden. Der Außenschicht zugewandte Kopf des Knopfes 26 - 26''' ist mit einem festen Stift ausgestattet, der vorzugsweise aus dem gleichen Material wie die Matrix der keramischen Deckschicht besteht, um unterschiedliche thermische Ausdehnungen zu vermeiden. Dieser Stift ist durch die Isolationsmatte 22 geführt.

Der gegenüberliegende Knopf 27 der Doppelknopfverbindung wird entweder, wie in Fig. 8 gezeigt, durch eine Technik ähnlich einer Druckknopfverbindung oder mittels einer Scheibe 28 und einer Klemmscheibe 29 realisiert. Da dieser Teil der Knopfverbindung der Kaltstruktur zugewandt ist und somit geringeren Temperaturbelastungen ausgesetzt ist, können hier neben keramischen Materialien auch kostengünstigere Metallteile eingesetzt werden. Die übrigen Teile der Knopfverbindung bestehen aus keramischen Faserverbundwerkstoffen oder aus monolithischer Keramik, wobei Knöpfe aus monolithischer Keramik in der Serienfertigung besonders kostengünstig extrudiert oder heiß gegossen werden können.

## Patentansprüche

1. Thermalschutzsystem, insbesondere Hitzeschutz für Raumfahrzeuge, mit einer auf die Außenhaut des Raumfahrzeuges großflächig aufgebrachten flexiblen Isolationsmatte, dadurch gekennzeichnet, daß die Isolationsmatte (2, 12, 22) mit wenigstens einer Lage einer Deckschicht (4-7, 14, 24, 25) aus einem keramischen Faserverbundwerkstoff versehen ist, die ihrerseits einen aus einem anorganischen Werkstoff bestehenden Überzug (8) aufweist.

2. Thermalschutzsystem nach Anspruch 1, dadurch gekennzeichnet, daß die Fasern der Deckschicht (4-7, 14, 24, 25) aus anorganischen Fasern auf der Basis von Oxiden besteht.

3. Thermalschutzsystem nach Anspruch 2, dadurch gekennzeichnet, daß die Fasern der Deckschicht (4-7, 14, 24, 25) aus Fasern auf der Basis von Siliziumoxid (SiO₂) besteht.

4. Thermalschutzsystem nach Anspruch 2, dadurch gekennzeichnet, daß die Fasern der Deckschicht (4-7, 14, 24, 25) aus Fasern auf der Basis von Aluminiumoxid (Al₂O₃) besteht.

5. Thermalschutzsystem nach Anspruch 2, dadurch gekennzeichnet, daß die Fasern der Deckschicht (4-7, 14, 24, 25) aus Fasern auf der Basis von Zirkoniumoxid (ZrO₂) besteht.

6. Thermalschutzsystem nach einem der Ansprüche 2 bis 5, dadurch gekennzeichnet, daß die Matrix der Deckschicht aus denselben Oxiden oder deren Mischungen besteht.

7. Thermalschutzsystem nach Anspruch 1, dadurch gekennzeichnet, daß die Fasern der Deckschicht (4-7, 14, 24, 25) aus einem Einschlaggewebe aus anorganischen Fasern auf der Basis von Karbiden besteht.

8. Thermalschutzsystem nach Anspruch 7, dadurch gekennzeichnet, daß die Deckschicht (4-7, 14, 24, 25) aus Fasern auf der Basis von Siliziumkarbid (SiC) besteht.

9. Thermalschutzsystem nach Anspruch 7, dadurch gekennzeichnet, daß die Fasern der Deckschicht aus Mischkarbiden auf der Basis von Silizium, Bor, Stickstoff und Kohlenstoff bestehen.

10. Thermalschutzsystem nach einem der Ansprüche 7 bis 9, dadurch gekennzeichnet, daß die Matrix der Deckschicht ebenfalls aus Mischkarbiden besteht.

11. Thermalschutzsystem nach einem der Ansprüche 1 bis 10, dadurch gekennzeichnet, daß der Überzug (8) aus einem anorganischen Binder und einem anorganischen Füller besteht.

12. Thermalschutzsystem nach Anspruch 11, dadurch gekennzeichnet, daß der Binder aus SiOC, SiO₂, SiC, SiBNC oder SiBN₃C besteht.

13. Thermalschutzsystem nach nach Anspruch 11, dadurch gekennzeichnet, daß der Füller aus SiB₆, SiC, TiB₂, Si₃N₄, SiB₃, ZrO₂, ZrSiO₄ oder einer Mischung aus zwei oder mehreren dieser Komponenten besteht.

14. Thermalschutzsystem nach einem der Ansprüche 1 bis 13, dadurch gekennzeichnet, daß die Verbindung von keramischer Deckschicht (4-7) und Isolationsmatte (2) durch eine anorganische, hochtemperaturbeständige Verklebung erfolgt.

15. Thermalschutzsystem nach Anspruch 14, dadurch gekennzeichnet, daß der Kleber aus SiC, SiOC, SiO₂ oder Al₂O₃ oder einer Kombination aus zwei oder mehreren dieser Materialien besteht.

16. Thermalschutzsystem nach einem der Ansprüche 1 bis 13, dadurch gekennzeichnet, daß die Verbindung von keramischer Deckschicht (14) und Isolationsmatte (12) mittels eines keramischen Fadens (15) erfolgt.

17. Thermalschutzsystem nach einem der Ansprüche 1 bis 13, dadurch gekennzeichnet, daß die Verbindung von keramischer Deckschicht (24, 25) und Isolationsmatte (22) durch keramische Knöpfe (26-26''') erfolgt.

18. Thermalschutzsystem nach Anspruch 17, dadurch gekennzeichnet, daß die Knöpfe (26) mittels eines keramischen Klebers an der Deckschicht (24, 25) befestigt sind.

19. Thermalschutzsystem nach Anspruch 17, dadurch gekennzeichnet, daß die Knöpfe (26') durch Einlaminieren in der Deckschicht (24, 25) befestigt sind.

20. Thermalschutzsystem nach einem der Ansprüche 1 bis 19, dadurch gekennzeichnet, daß die Verbindung von Isolationsmatte (2, 12, 22) und Kaltstruktur (1, 11, 21) aus einer Verklebung mit einem organischen Kleber, wie vorzugsweise einem Kleber, auf Silikonbasis, besteht.
